# EUROPEAN PATENT APPLICATION

(11) **EP 4 806 719 A1**
(43) Date of publication of application: **16.09.2026**
(21) Application number: 26164066.8
(22) Date of filing: 11.03.2026
(51) Int. Cl.: B60L 53/22, B60L 53/30

(54) **ELECTRIC VEHICLE CHARGING CONTROL APPARATUS AND SYSTEM**

(30) Priority: 11.03.2025 KR 20250031109
(71) Applicant: LG Innotek Co., Ltd., Seoul 07796 (KR)
(72) Inventor: LEE, Seung myung, 07796 Seoul (KR); KIM, Seojin, 07796 Seoul (KR)
(74) Representative: DREISS Patentanwälte PartG mbB

(57) **Abstract**

An electric vehicle charging control apparatus according to the present disclosure comprises a first power conversion unit configured to convert AC power supplied from a grid into DC power; a second power conversion unit configured to convert the DC power output from the first power conversion unit into charging power; and a relay configured to control the charging power output from the second power conversion unit to be supplied to a battery. The second power conversion unit is configured to receive a power application control signal, and when the second power conversion unit receives the power application control signal, the first power conversion unit and the relay may be driven in parallel.

## Description

### [Technical Field]

The present disclosure relates to control of charging of an electric vehicle battery, and more particularly, to techniques for controlling charging of an electric vehicle battery to more efficiently deliver electrical power.

### [Background Art]

Advances in battery technology, electrical and electronic technologies, and communication technologies have significantly improved the performance, efficiency, and user convenience of electric vehicles. In conjunction with growing efforts to address environmental concerns and promote energy conservation, adoption of electric vehicles has continued to increase. In particular, improvements in the energy density of lithium-ion batteries have led to increased battery capacity, thereby substantially extending the driving range of electric vehicles.

As the adoption of electric vehicles (Electric Vehicles, EVs) continues to increase, advancements in battery charging technologies have become increasingly important. Because EV batteries must store a large amount of energy and utilize that energy efficiently, minimizing energy loss during the charging process and ensuring operational safety are significant technical challenges.

In particular, various charging schemes have been studied to maximize the efficiency of charging infrastructure, with wired charging and wireless charging being representative approaches.

In the case of wireless charging, electrical power is typically transmitted through a charging pad or coils embedded in a roadway. Such wireless charging systems provide enhanced user convenience by enabling power transfer without physical contact. However, advanced control technologies are required to ensure charging efficiency and safety. In particular, various factors-including alignment between a transmission coil and a reception coil, electromagnetic interference (EMI), and temperature variations-may affect charging performance, thereby necessitating precise monitoring and management.

Meanwhile, even in wired charging systems, technologies for appropriately regulating charging voltage and current to extend battery lifespan and maximize charging efficiency have continued to evolve. In particular, as fast charging technologies have advanced, the role of charging protocols and protection mechanisms for safely delivering high power to a battery has become increasingly important. Such technologies have developed toward improving overall charging safety by preventing overheating during charging, providing overvoltage and overcurrent protection, and incorporating battery monitoring functions such as State of Charge (SOC) and State of Health (SOH) diagnostics.

During the charging process, particularly at the initiation stage, a signal for applying power is typically input prior to the start of power delivery in order to ensure stable power transfer. Based on this signal, appropriate control for power delivery is performed. If charging is initiated abnormally or if the charging environment is unsuitable, problems such as overheating, incomplete charging, or battery damage may occur. Accordingly, there is a need for technologies capable of safely and rapidly controlling charging after a power-application signal is received.

### [Prior Art Documents]

### [Patent Documents]

Korean Patent Application Publication No. 10-2024-0043399 (published Apr. 3, 2024).

### [Disclosure]

### [Technical Problem]

The present disclosure has been made in view of the above-described technical challenges, and an object of the present disclosure is to efficiently control charging of a battery of an electric vehicle.

Another object of the present disclosure is to provide an apparatus and a system capable of improving stability during power supply to an electric vehicle while safely and rapidly controlling power delivery and charging.

### [Technical Solution]

An electric vehicle charging control apparatus according to the present disclosure, comprising: a first power conversion unit configured to convert AC power supplied from a grid into DC power; a second power conversion unit configured to convert the DC power output from the first power conversion unit into charging power; and a relay configured to control the charging power output from the second power conversion unit to be supplied to a battery, wherein the second power conversion unit is configured to receive a power application control signal, and wherein, when the second power conversion unit receives the power application control signal, the first power conversion unit and the relay are configured to be driven in parallel.

The AC power supplied from the grid may be three-phase AC power.

The electric vehicle charging control apparatus may further comprise a link capacitor disposed between the first power conversion unit and the second power conversion unit.

The relay may comprise a plurality of switches, and the plurality of switches may regulate a transmission path of the charging power through opening and closing operations.

The first power conversion unit may comprise a rectifier circuit configured to convert the AC power into the DC power, and the rectifier circuit may comprise at least one semiconductor switch.

The second power conversion unit may comprise a resonant circuit configured to convert the DC power into the charging power, and the resonant circuit may comprise at least one of a semiconductor switch, an inductor, and a capacitor.

The first power conversion unit may comprise: an AC/DC power converter configured to convert the AC power into the DC power; and an AC/DC signal processing unit configured to process a control signal for controlling the AC/DC power converter.

The AC/DC signal processing unit may comprise an operation unit configured to determine whether the power application control signal has been received.

When the operation unit determines that the power application control signal has been received, the AC/DC signal processing unit may transmit a PWM switching signal to the AC/DC power converter.

The second power conversion unit may comprise: a DC/DC power converter configured to convert the DC power into the charging power; and a DC/DC signal processing unit configured to process a control signal for controlling the DC/DC power converter.

The DC/DC signal processing unit may comprise: an operation unit configured to determine whether the power application control signal has been received; and a converter configured to convert the DC voltage output from the first power conversion unit into a digital value.

The DC/DC signal processing unit may transmit a switching signal to the relay when the operation unit determines that the power application control signal has been received.

The DC/DC signal processing unit may transmit a PWM switching signal to the DC/DC power converter based on the digital value converted by the converter.

An electric vehicle charging control system according to the present disclosure, comprising: a grid configured to supply power; an electric vehicle charging control apparatus configured to convert the power supplied from the grid and supply the converted power to an electric vehicle; and a charger configured to transmit a power application control signal to the electric vehicle charging control apparatus, wherein the electric vehicle charging control apparatus comprises: a first power conversion unit configured to convert AC power supplied from the grid into DC power; a second power conversion unit configured to convert the DC power output from the first power conversion unit into charging power; and a relay configured to control the charging power output from the second power conversion unit to be supplied to a battery, and wherein, when the power application control signal is received, the first power conversion unit and the relay are configured to be driven in parallel.

The charger may transmit the power application control signal to the electric vehicle charging control apparatus through CAN communication.

The relay may comprise a plurality of switches, and the plurality of switches may regulate a transmission path of the charging power through opening and closing operations.

The first power conversion unit may comprise a rectifier circuit configured to convert the AC power into the DC power, and the rectifier circuit may comprise at least one semiconductor switch.

The first power conversion unit may comprise: an AC/DC power converter configured to convert the AC power into the DC power; and an AC/DC signal processing unit configured to process a control signal for controlling the AC/DC power converter.

The second power conversion unit may comprise a resonant circuit configured to convert the DC power into the charging power, and the resonant circuit may comprise at least one of a semiconductor switch, an inductor, and a capacitor.

The second power conversion unit may comprise: a DC/DC power converter configured to convert the DC power into the charging power; and a DC/DC signal processing unit configured to process a control signal for controlling the DC/DC power converter.

### [Advantageous Effects]

According to the electric vehicle charging control apparatus and system of the present disclosure, charging control during a battery charging process of an electric vehicle may be performed efficiently, thereby improving stability and speed of power delivery. In addition, through efficient charging control, issues such as overvoltage, overcurrent, and overheating may be prevented in advance, thereby protecting battery lifespan.

Also, by enabling safe and rapid control of power supply and charging operations, the present disclosure may maximize charging efficiency. By reducing a time required for transmitting a voltage application signal during charging, rapid charging control may be achieved.

### [Description of Drawings]

FIG. 1 is a conceptual diagram illustrating an electric vehicle and an electric vehicle charging station.
FIG. 2 is a block diagram illustrating a configuration of an electric vehicle battery charging system.
FIG. 3 is a diagram illustrating a power delivery system for charging an electric vehicle.
FIG. 4 is a diagram illustrating a time required for power delivery in the power delivery system for charging an electric vehicle shown in FIG. 3.
FIG. 5 is a diagram illustrating a configuration of a power delivery system according to an embodiment of the present disclosure, shown in FIG. 3.
FIG. 6 is a diagram illustrating a system for charging an electric vehicle.
FIG. 7 is a diagram illustrating a DC relay of the power delivery system for charging an electric vehicle according to the present disclosure.
FIG. 8 is a diagram illustrating a sequence and a time required for the sequence in the power delivery system for charging an electric vehicle according to the present disclosure.
FIG. 9 is a diagram illustrating an electric vehicle charging system according to the present disclosure.
FIG. 10 is a diagram illustrating an electric vehicle charging system according to an embodiment of the present disclosure.

### [Mode for Invention]

Specific details of the embodiments are set forth in the following detailed description and the accompanying drawings.

The advantages and features of the present invention, and the manner in which they are attained, will become apparent with reference to the embodiments described hereinafter in conjunction with the accompanying drawings. However, the present invention is not limited to the embodiments disclosed below and may be embodied in various different forms. The embodiments are provided only to make the disclosure of the present invention complete and to fully convey the scope of the invention to those having ordinary skill in the art, and the present invention is defined only by the scope of the appended claims. Like reference numerals designate like elements throughout the specification.

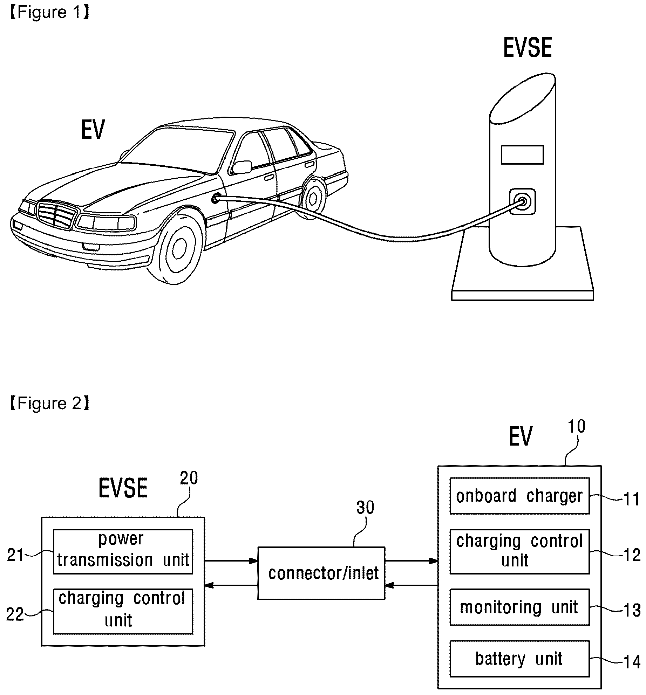

FIG. 1 is a conceptual diagram illustrating an electric vehicle and an electric vehicle charging station.

A charging system of an electric vehicle battery may operate by transmitting and receiving a charging control signal, charging control information, and power between a grid or Electric Vehicle Supply Equipment (EVSE) and an electric vehicle (EV).

As shown in FIG. 1, the EVSE may be located at a charging station. The EVSE may also be located within a home or implemented in a portable form.

In addition, the EVSE may be implemented to be mountable within an electric vehicle (EV) (for example, by enabling the electric vehicle charging control apparatus to perform the same function), thereby allowing the electric vehicle (EV) to charge another electric vehicle (EV).

FIG. 2 is a block diagram illustrating a configuration of an electric vehicle battery charging system.

An electric vehicle battery charging system may comprise an EV (10), an EVSE (20), and a connector/inlet (300) connecting the EV (10) and the EVSE (20).

Referring to FIG. 2, the EV (10) may comprise an onboard charger (11), a charging control unit (12), a monitoring unit (13), and a battery unit (14).

When performing normal charging or AC charging of the electric vehicle, the onboard charger (11) may convert power received from the EVSE (20) and deliver the converted power to a high-voltage battery to charge the battery.

In addition, the onboard charger (11) may be implemented to perform voltage boosting, rectification, high-voltage interruption, and CAN communication for normal charging or AC charging.

It should be understood that, even in the case of normal charging or AC charging, the onboard charger (11) may not be used depending on a charging control circuit within the EV (10).

The charging control unit (12) may communicate with an MCU (Micro Control Unit) within the vehicle and with the EVSE (20) to charge the battery of the electric vehicle, and may generate a charging control signal. Specifically, the MCU within the vehicle may comprise components related to battery charging of the electric vehicle, such as a BMS (Battery Management System), a BMU (Battery Management Unit), a CMU (Cell Monitoring Unit), a BMIC (Battery Monitoring Integrated Circuit), a CMM (Cell Management Microcontroller), and a BCU (Battery Control Unit).

The charging control unit (12) may receive a charging control signal transmitted from the EVSE (20) and generate information and signals for controlling charging of the electric vehicle. The generated charging control signal for the electric vehicle battery may be transmitted to the MCU within the vehicle to enable precise control of the battery charging process.

The monitoring unit (13) may be implemented to perform, during charging of the battery of the electric vehicle, functions such as overvoltage detection, current leakage detection, abnormal signal detection, and circuit disconnection detection. For example, the monitoring unit (13) may be configured to detect whether the EVSE (20) and the EV (10) are electrically connected for charging of the battery of the electric vehicle, and may also detect whether the EV (10) is connected to ground to ensure safety during battery charging.

The battery unit (14) may be implemented to store power received from the EVSE (20) during charging of the battery of the electric vehicle. In addition, the battery unit (14) may be configured to measure SOC (State of Charge) information representing a state of the stored power and to convert the stored power for use.

Referring to FIG. 2, the EVSE (20) may comprise a power transmission unit (21) and a charging control unit (22). The power transmission unit (21) may deliver power to the EV (10) based on a charging control signal and charging control information. The charging control unit (22) may be implemented to transmit a signal for controlling charging or to initiate and interrupt charging through communication with the charging control unit (12) of the EV (10).

Communication between the charging control unit (22) of the EVSE (20) and the charging control unit (12) of the EV (10) may be performed in accordance with protocols such as CCS (Combined Charging System), GB/T, or NACS (North American Charging Standard), but is not limited thereto. For example, when communication is performed in accordance with the CCS (Combined Charging System) protocol, charging control signals may be transmitted and received through PLC (Power Line Communication) and PWM communication.

Referring to FIG. 2, the connector/inlet (30) may electrically connect the EVSE (20) and the EV (10) for transmission of power and communication of charging control signals and charging control information. Specifically, the connector/inlet (30) may comprise a power port, a ground port, a CP (Control Pilot) port, and a PD (Proximity Detection) port.

The power port may deliver power transmitted from the EVSE (20) to the EV (10). The CP (Control Pilot) port may transmit signals for controlling charging and may be configured to support PLC (Power Line Communication), PWM communication, and/or CAN (Controller Area Network) communication protocols. The PD (Proximity Detection) port may be configured to detect whether a connector is connected to an inlet.

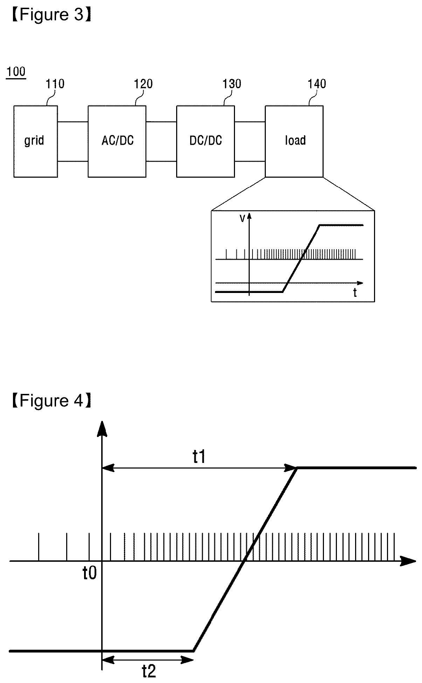

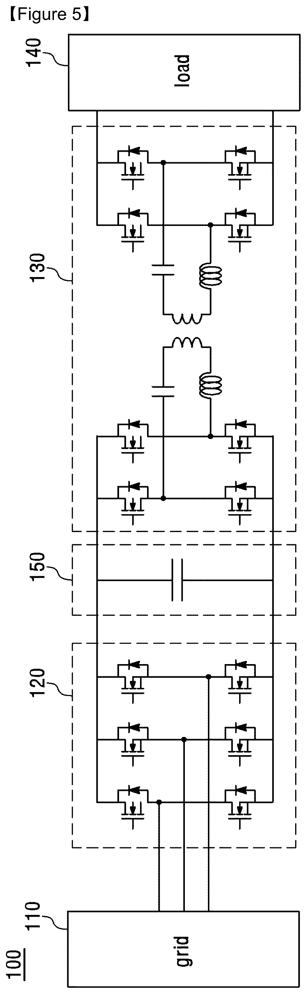

FIG. 3 is a diagram illustrating a power delivery system for charging an electric vehicle. FIG. 4 is a diagram illustrating a time required for power delivery in the power delivery system for charging an electric vehicle shown in FIG. 3. FIG. 5 is a diagram illustrating a configuration of a power delivery system according to an embodiment of the present disclosure, shown in FIG. 3.

A power delivery system (100) for charging an electric vehicle may comprise a grid (110) configured to supply power, an AC/DC conversion unit (120) configured to receive power and convert AC power into DC power, a DC/DC conversion unit (130) configured to convert the DC power into a charging specification suitable for charging, and a load (140).

The grid (110) may supply power to the power delivery system (100) for charging the electric vehicle. The grid (110) may receive power in the form of AC from a power network or a power source, and the received power may be supplied to a battery through a conversion process into an appropriate form within the power delivery system (100).

The grid (110) may be configured to maintain a rated voltage and frequency at constant levels, and may further include power safety protection devices to prevent overload and degradation of power quality. For example, the grid (110) may be a municipal power network supplying commercial power at 220V or 380V. The grid (110) may be configured to operate in conjunction with renewable energy sources (for example, solar power or wind power generation).

The grid (110) may also be configured to regulate power demand in real time and to perform functions for optimizing a charging schedule.

The AC/DC conversion unit (120) may be configured to convert AC power supplied from the grid (110) into DC power. Since a battery of an electric vehicle is charged using high-voltage DC, the AC power must be converted into DC power through the AC/DC conversion unit (120).

The AC/DC conversion unit (120) may further include a rectifier circuit and a filter circuit for power conversion, and may further include a high-frequency switching circuit to improve power conversion efficiency. For example, the AC/DC conversion unit (120) may be configured to receive high-voltage AC power of 220V, 380V, or higher and convert the received AC power into DC power (for example, 400V). The AC/DC conversion unit (120) may further include a Power Factor Correction (PFC) circuit to improve power quality. In addition, the AC/DC conversion unit (120) may be configured in a multi-stage converter architecture to implement efficient power conversion.

The AC/DC conversion unit (120) may comprise a converter for AC/DC power conversion and a controller for controlling the AC/DC power conversion.

The DC/DC conversion unit (130) may be configured to convert the DC power converted by the AC/DC conversion unit (120) into power (charging power) that satisfies charging requirements of an electric vehicle battery (for example, requirements according to CHAdeMO, CCS, GB/T, or NACS standards). More specifically, the DC/DC conversion unit (130) may perform conversion to supply appropriate power in consideration of a State of Charge (SOC) and voltage requirements for charging the battery. For example, the DC/DC conversion unit (130) may convert DC power (for example, 400V) converted by the AC/DC conversion unit into power within a range of 200V to 800V and output the converted power.

The DC/DC conversion unit (130) may comprise a converter for DC/DC power conversion and a controller for controlling the DC/DC power conversion.

The load (140) may be configured to receive power output through the power conversion process of the power delivery system (100). The load (140) may comprise a battery and/or a BMS (Battery Management System) of the electric vehicle.

The load (140) may be configured to receive power delivered based on control signals of the power delivery system (100) and to perform charging of the battery.

Referring to FIG. 4, in a power delivery system for charging an electric vehicle, an output voltage time (t1) and a voltage output start time (t2) may be required from a time point (t0) at which a power application control signal for controlling power-on is applied until an output voltage reaches a preset power level. For example, the output voltage time (t1) may be 4 seconds from the time point (t0) at which the power application control signal is applied to the electric vehicle charging control apparatus, and the voltage output start time (t2) may be 2 seconds.

The system (100) according to the present disclosure may efficiently control and reduce the output voltage time (t1) and the voltage output start time (t2) from the time point (t0) at which the power application control signal is applied.

More specifically, by efficiently controlling power conversion in the AC/DC conversion unit (120) and the DC/DC conversion unit (130), and by efficiently performing signal processing, an initiation time of power delivery to the load (140) may be reduced compared to conventional techniques.

Referring to FIG. 5, the power delivery system (100) according to an embodiment of the present disclosure may comprise the grid (110), the AC/DC conversion unit (120), the DC/DC conversion unit (130), and the load (140). The power delivery system (100) may further include a link capacitor (150) disposed between the AC/DC conversion unit (120) and the DC/DC conversion unit (130).

The AC/DC conversion unit (120) according to an embodiment of the present disclosure may comprise a power conversion circuit for AC/DC power conversion.

More specifically, the AC/DC conversion unit (120) may be configured as a rectifier circuit that converts three-phase AC power into DC power. The rectifier circuit may be configured to include at least one power semiconductor switch (for example, an IGBT or a MOSFET) to convert the three-phase AC power into DC power, and may be configured to optimize power conversion and perform active Power Factor Correction (PFC) through a switching controller (for example, PWM control). In addition, the rectifier circuit may further include diodes and an output filter that operate together with the switching element to perform a rectification function.

The link capacitor (150) according to an embodiment of the present disclosure may be disposed between the AC/DC conversion unit (120) and the DC/DC conversion unit (130), and may be configured to stabilize the DC power output from the AC/DC conversion unit (120) and to reduce voltage ripple.

The link capacitor (150) may further reduce switching transients and noise generated during the power conversion process.

The DC/DC conversion unit (130) according to an embodiment of the present disclosure may convert the DC power supplied from the link capacitor (150) to match requirements of the load (140).

More specifically, the DC/DC conversion unit (130) may be configured to include at least one power semiconductor switch (for example, an IGBT or a MOSFET). In addition, the DC/DC conversion unit (130) may comprise an LLC resonant circuit including at least one inductor and capacitor for high-efficiency power conversion.

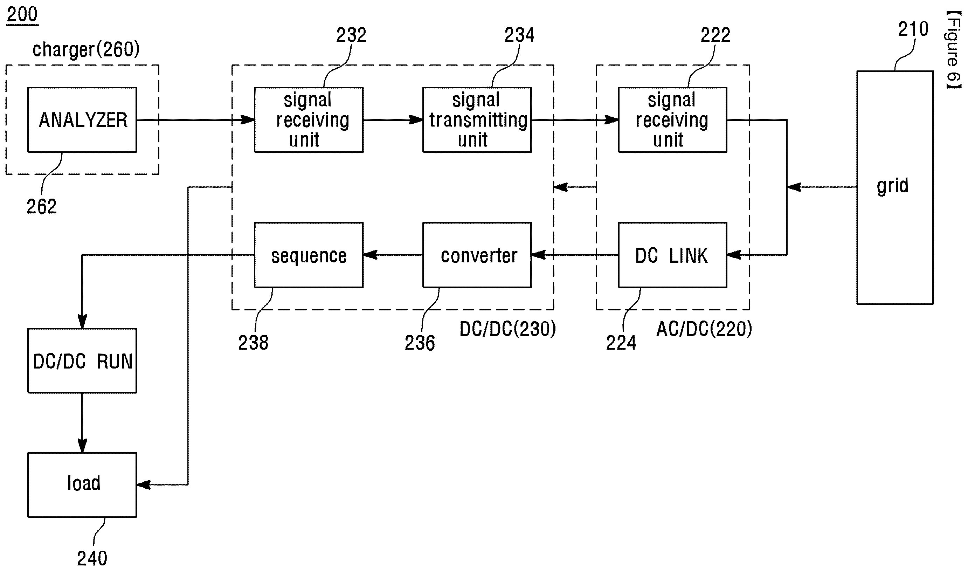

FIG. 6 is a diagram illustrating a system for charging an electric vehicle.

Referring to FIG. 6, a system (200) for charging an electric vehicle according to an embodiment of the present disclosure may comprise a grid (210), an AC/DC conversion unit (220), a DC/DC conversion unit (230), a load (240), and a charger (260).

The charger (260) may be configured to transmit a charging start control signal to the AC/DC conversion unit (220) and the DC/DC conversion unit (230). The charger (260) may further include an analyzer (262) configured to transmit the charging start control signal.

More specifically, the analyzer (262) may be configured to transmit the charging start control signal to the AC/DC conversion unit (220) and the DC/DC conversion unit (230) based on predetermined communication (for example, PWM communication, PLC (Power Line Communication), or CAN (Controller Area Network) communication).

The charger (260) according to an embodiment of the present disclosure may be a device configured to control charging of a battery of an electric vehicle located inside and/or outside a vehicle. More specifically, the charger (260) may control a charging process through communication with a BMS (Battery Management System), the AC/DC conversion unit (220), and the DC/DC conversion unit (230). In particular, the charger (260) may determine whether to apply power through communication with the DC/DC conversion unit (230), and may interrupt charging when overvoltage, overcurrent, or an abnormal condition occurs.

The charger (260) may communicate with the AC/DC conversion unit (220) and the DC/DC conversion unit (230) through the analyzer (262), and may control a charging process and power conversion through such communication.

The charger (260) and the analyzer (262) according to an embodiment of the present disclosure may communicate with the AC/DC conversion unit (220) and the DC/DC conversion unit (230) through at least one communication protocol selected from PWM communication, PLC (Power Line Communication), and CAN (Controller Area Network) communication.

The charger (260) according to an embodiment of the present disclosure may comprise a charging controller, an MCU (Micro Control Unit), a VCU (Vehicle Control Unit), and an EVSE (Electric Vehicle Supply Equipment) within the vehicle.

The system (200) for charging an electric vehicle according to an embodiment of the present disclosure may receive power from the grid (210), convert the received power, and supply the converted power to the load (240) as appropriate power for charging.

The system (200) for charging an electric vehicle according to an embodiment of the present disclosure may be configured to receive a control signal for applying power from the charger (260), and to control power supply for charging the electric vehicle based on the control signal.

More specifically, the system (200) for charging an electric vehicle according to an embodiment of the present disclosure may perform control for initiating charging of the electric vehicle.

First, a power application control signal from the analyzer (262) of the charger (260) may be transmitted to a signal receiving unit (232) of the DC/DC conversion unit (230). The power application control signal may be transmitted through communication between the analyzer (262) and the signal receiving unit (232) of the DC/DC conversion unit (230). The signal receiving unit (232) of the DC/DC conversion unit (230) may determine whether the power application control signal has been received or whether a power link has been established at predetermined time intervals (for example, every 1 second).

Next, the signal receiving unit (232) of the DC/DC conversion unit (230) may transmit a signal to a signal transmitting unit (234) of the DC/DC conversion unit (230) in order to forward the signal to the AC/DC conversion unit (220). The signal transmitting unit (234) of the DC/DC conversion unit (230) may receive a value of the signal input to the signal receiving unit (232).

Thereafter, a signal receiving unit (222) of the AC/DC conversion unit (220) may initiate performance of an AC/DC RUN operation for starting AC/DC power conversion based on the signal received from the signal transmitting unit (234) of the DC/DC conversion unit (230).

Thereafter, when an AC/DC RUN operation is performed, the DC LINK (224) of the AC/DC conversion unit (220) is charged until reaching a predetermined voltage value (for example, 750V). The voltage of the DC LINK (224) may gradually increase, and during this process, a capacitor of the DC LINK (224) may be charged.

When charging is completed such that the DC LINK (224) reaches the predetermined voltage value (for example, 750V), a converter (236) (for example, an ADC (Analog-to-Digital Converter)) of the DC/DC conversion unit (230) may monitor the voltage value of the DC LINK (224) in real time and convert the monitored voltage value into a digital value. A sequence (238) may be driven based on the digital value output from the converter (236).

Thereafter, by driving the sequence (238), a DC/DC RUN operation for DC power conversion to supply DC power to the load (240) may be initiated.

The sequence (238) according to an embodiment of the present disclosure may operate to control a power relay included in the DC/DC conversion unit (230) to supply power to the load (240). More specifically, in the DC/DC conversion unit (230), the sequence (238) may connect a pre-charge relay through a pre-charge circuit to safely and gradually increase voltage. After completion of pre-charging, the sequence (238) may release the pre-charge relay and connect a main relay to supply power to the DC/DC conversion unit (230), and may control activation of the main relay to supply power to the load (240).

The power supplied to the load (240) may be charged such that a voltage value is gradually increased by the DC/DC RUN operation until reaching a predetermined output voltage (for example, 1000V).

As described above, the system (200) for charging an electric vehicle may control the AC/DC RUN operation of the AC/DC conversion unit (220) and the DC/DC RUN operation of the DC/DC conversion unit (230) based on the power application control signal transmitted from the charger (260), thereby supplying power to the load (240).

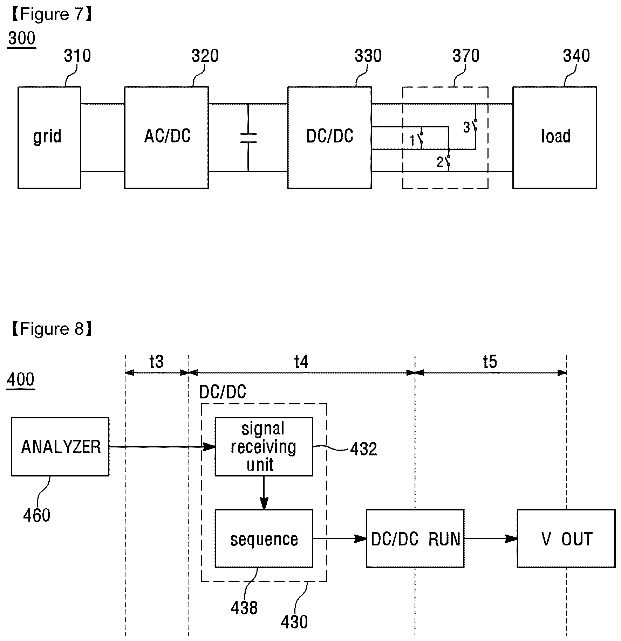

FIG. 7 is a diagram illustrating a DC relay of the power delivery system for charging an electric vehicle according to the present disclosure.

A system (300) for charging an electric vehicle according to an embodiment of the present disclosure may comprise a grid (310), an AC/DC conversion unit (320), a DC/DC conversion unit (330), and a load (340). The system (300) for charging an electric vehicle may further include a DC relay (370).

Since the system (300) for charging an electric vehicle may comprise configurations described above with respect to the previously described systems, redundant descriptions thereof are omitted for brevity.

The DC relay (370) according to an embodiment of the present disclosure may operate to switch DC voltage in the system (300) for power delivery so as to control supply of power to the load (340). The DC relay (370) may comprise a plurality of switches configured to selectively open and close a path through which DC voltage output from the DC/DC conversion unit (330) is delivered to the load (340).

The DC relay (370) may open or close the switches under specific conditions to regulate a power path. For example, when charging is completed, the switches of the DC relay (370) may be transitioned to an open state to interrupt power supply to the load (340). Conversely, when charging is initiated or required, the switches may be transitioned to a closed state to allow power to be smoothly supplied to the load (340). In addition, the DC relay (370) may be configured to rapidly open the switches upon detection of overcurrent or abnormal voltage, thereby protecting the load (340) and the system (300).

The DC relay (370) enables the electric vehicle charging system (300) to stably supply power to the load (340). In addition, the DC relay (370) may perform a function of protecting the load (340) even under abnormal operating conditions. In particular, as illustrated in FIG. 7, the DC relay (370) may comprise a plurality of switches, thereby allowing charging to be safely controlled through multiple switching paths.

FIG. 8 is a diagram illustrating a sequence and a time required for the sequence in the power delivery system for charging an electric vehicle according to the present disclosure.

The system (400) for charging an electric vehicle may comprise configurations described above with respect to the previously described systems, and thus redundant descriptions thereof are omitted for brevity.

Control of the power delivery system (400) according to an embodiment of the present disclosure may comprise: transmitting a control signal for applying power output from the analyzer (460) to the DC/DC conversion unit (430); transmitting the signal from a signal receiving unit (432) of the DC/DC conversion unit (430) to a sequence (438); performing a DC/DC RUN operation; and outputting power.

More specifically, the control signal for applying power output from the analyzer (460) may be transmitted to the DC/DC conversion unit (430) through communication (for example, CAN (Controller Area Network) communication), and a time (t3) may be required for the communication.

In addition, the DC/DC conversion unit (430) may activate a DC relay and perform the DC/DC RUN operation through the sequence (438), and a time (t4) may be required for this process.

When the DC/DC RUN operation is performed, power may be charged until reaching a predetermined output voltage (for example, 1000V), and once charging is completed, the output voltage may be supplied to the load. A time (t5) may be required for charging the power.

The system (400) according to the present disclosure may be configured to efficiently control charging by activating the DC relay through the sequence (438) and reducing a time (t4) required to perform the DC/DC RUN operation.

More specifically, when the DC/DC conversion unit (430) receives a power application control signal from the analyzer (460), the system (400) may be configured to perform, in parallel, the sequence (438) for switching and driving the DC relay and an AC/DC RUN operation through transmission of a control signal to the AC/DC conversion unit.

As a more specific example, in the system (400) according to an embodiment of the present disclosure, when relay switching is performed, t3 may be 54 ms, t4 may be 300 ms, and t5 may be 1000 ms. In contrast, when relay switching is not performed, t3 may be 54 ms, t4 may be 50 ms, and t5 may be 1000 ms. Accordingly, when relay switching is performed simultaneously (or in parallel) with transmission of the signal for the AC/DC RUN operation, t4 may be reduced by 250 ms.

Referring again to FIG. 4, in the system (400) according to an embodiment of the present disclosure, a voltage output start time (t2) may be reduced to 0.4 seconds from a time point (t0) at which a power-on signal is applied, and an output voltage time (t1) may be reduced to 1.4 seconds.

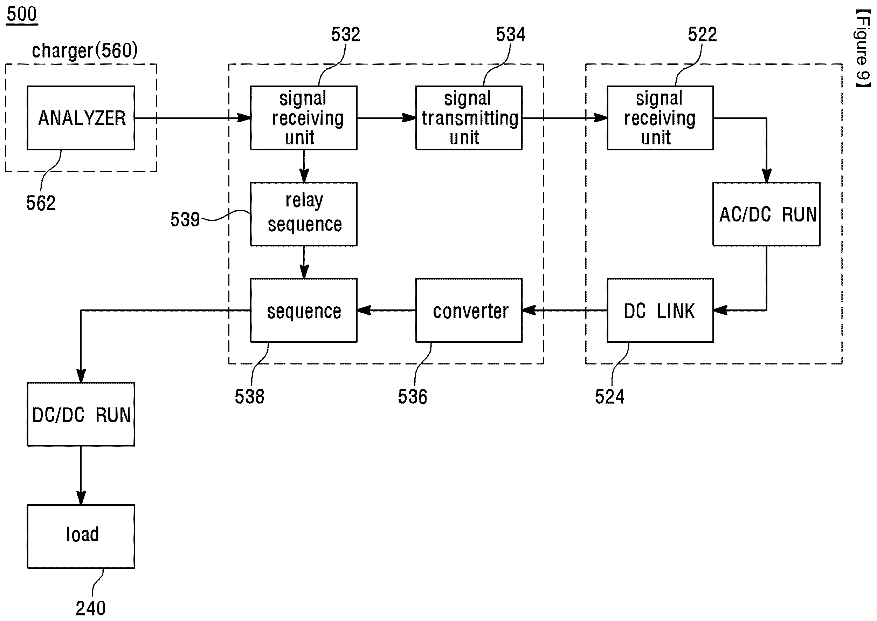

FIG. 9 is a diagram illustrating an electric vehicle charging system according to the present disclosure.

The system (500) for charging an electric vehicle according to an embodiment of the present disclosure may perform control for initiating charging of the electric vehicle.

First, a power application control signal from the analyzer (562) of the charger (560) may be transmitted to a signal receiving unit (532) of the DC/DC conversion unit (530). The power application control signal may be transmitted through communication between the analyzer (562) and the signal receiving unit (532) of the DC/DC conversion unit (530). The signal receiving unit (532) of the DC/DC conversion unit (530) may determine whether the power application control signal has been received or whether a power link has been established at predetermined time intervals (for example, every 1 second).

Next, the signal receiving unit (532) of the DC/DC conversion unit (530) may transmit a signal to a signal transmitting unit (534) of the DC/DC conversion unit (530) in order to forward the signal to the AC/DC conversion unit (520). The signal transmitting unit (534) of the DC/DC conversion unit (530) may receive a value of the signal input to the signal receiving unit (532).

In addition, simultaneously with transmitting the signal to the AC/DC conversion unit (520), the signal receiving unit (532) of the DC/DC conversion unit (530) may perform a sequence (538) for switching and driving the DC relay through a relay sequence (539). More specifically, operation of the DC relay may be performed simultaneously with charging of the DC LINK (524) through execution of the AC/DC RUN operation as described above, thereby reducing a time required for the system (500) to supply power to the load (540).

Thereafter, the signal receiving unit (522) of the AC/DC conversion unit (520) may initiate performance of an AC/DC RUN operation for starting AC/DC power conversion based on the signal received from the signal transmitting unit (534) of the DC/DC conversion unit (530).

When the AC/DC RUN logic is performed, the DC LINK (524) of the AC/DC conversion unit (520) is charged until reaching a predetermined voltage value (for example, 750V). The voltage of the DC LINK (524) may gradually increase, and during this process, a capacitor of the DC LINK (524) may be charged.

Thereafter, when charging is completed such that the DC LINK (524) reaches a predetermined voltage value (for example, 750V), a converter (536) (for example, an ADC (Analog-to-Digital Converter)) of the DC/DC conversion unit (530) may monitor a voltage value of the DC LINK (524) in real time and convert the monitored voltage value into a digital value. The sequence (538) may be driven based on the digital value output from the converter (536).

Next, the DC relay may be switched and driven by the relay sequence (539), and the DC/DC RUN operation for DC power conversion to supply DC power to the load (540) may be initiated by driving the sequence (538).

The sequence (538) according to an embodiment of the present disclosure may operate to control the DC relay included in the DC/DC conversion unit (530) to supply power to the load (540). More specifically, in the DC/DC conversion unit (530), the sequence (538) may connect a pre-charge relay through a pre-charge circuit to safely and gradually increase voltage. After completion of pre-charging, the sequence (538) may release the pre-charge relay and connect a main relay to supply power to the DC/DC conversion unit (530), and may control activation of the main relay to supply power to the load (540).

The power supplied to the load (540) may be charged such that a voltage value is gradually increased by the DC/DC RUN operation until reaching a predetermined output voltage (for example, 1000V).

As described above, the system (500) for charging an electric vehicle may control the AC/DC RUN operation of the AC/DC conversion unit (520) and the DC/DC RUN operation of the DC/DC conversion unit (530) based on the power application control signal transmitted from the charger (560), thereby supplying power to the load (540).

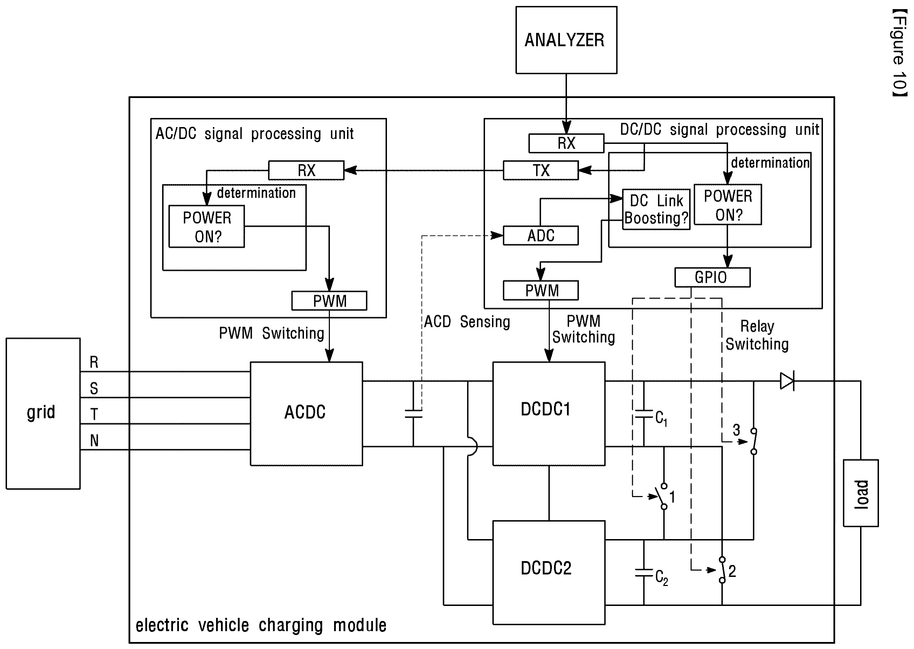

FIG. 10 is a diagram illustrating an electric vehicle charging system according to an embodiment of the present disclosure.

The electric vehicle charging system according to an embodiment of the present disclosure may include an electric vehicle charging module. The electric vehicle charging module may receive a control signal for applying power from the analyzer and may control charging of the electric vehicle as described above. In addition, the electric vehicle charging system may be configured to convert three-phase AC power received from the grid into DC power through the AC/DC conversion unit, and to convert the DC power into power satisfying requirements of the load through the DC/DC conversion unit for supply thereto.

The electric vehicle charging module according to an embodiment of the present disclosure may further include an operation unit configured to determine whether a power application control signal has been received. For example, an operation unit included in a signal processing unit of the AC/DC conversion unit may determine whether a signal receiving unit has received the power application control signal, and when the signal is applied, may control performance of AC/DC power conversion through a PWM switching signal.

In addition, for example, an operation unit included in a signal processing unit of the DC/DC conversion unit may determine whether the power application control signal has been received and may determine whether charging of the DC LINK has been completed through a converter (for example, an ADC (Analog-to-Digital Converter)). When charging of the DC LINK is completed and it is determined that the power application control signal has been received, the operation unit may control performance of DC/DC power conversion through a PWM switching signal and may control a power relay through a controller (for example, a GPIO (General Purpose Input/Output)) that outputs a digital signal as an analog signal.

The electric vehicle charging module according to an embodiment of the present disclosure may further include, as described above, a controller (for example, a GPIO (General Purpose Input/Output)) configured to output a digital signal as an analog signal, and a PWM switching signal output unit.

The AC/DC conversion unit of the electric vehicle charging module according to an embodiment of the present disclosure may include an AC/DC signal processing unit (controller) configured to process a control signal and an AC/DC power converter.

The DC/DC conversion unit of the electric vehicle charging module according to an embodiment of the present disclosure may include a DC/DC signal processing unit (controller) configured to process a control signal and a DC/DC power converter.

Although the foregoing detailed description has been made with reference to preferred embodiments of the present invention, it should be understood by those of ordinary skill in the art that various modifications and changes may be made to the present invention without departing from the spirit and scope of the present invention as set forth in the appended claims.

### [Description of Reference Numerals]

- 10: Electric Vehicle (EV)
- 11: onboard charger
- 12: charging controll unit
- 13: monitoring unit
- 14: battery unit
- 20: EVSE (Electric Vehicle Supply Equipment)
- 21: power transmission unit
- 22: charging control unit
- 110: grid
- 120: AC/DC conversion unit
- 130: DC/DC conversion unit
- 140: load
- 150: link capacitor
- 220: AC/DC conversion unit
- 224: DC LINK
- 230: DC/DC conversion unit
- 232: receiving unit
- 234: transmitting unit
- 236: converter
- 238: sequence
- 240: load
- 260: charger
- 262: analyzer
- 300: conector/inlet
- 320: AC/DC conversion unit
- 330: DC/DC conversion unit
- 340: load
- 370: relay
- 400: power delivery system
- 430: DC/DC conversion unit
- 432: receiving unit
- 440: load
- 520: AC/DC conversion unit
- 524: DC LINK
- 530: DC/DC conversion unit
- 532: receiving unit
- 534: signal transmitting unit
- 539: relay sequence
- 540: load
- 560: charger

## Claims

1. An electric vehicle (10) charging control apparatus, comprising:
a first power conversion unit configured to convert AC power supplied from a grid (110) into DC power;
a second power conversion unit configured to convert the DC power output from the first power conversion unit into charging power; and
a relay (370) configured to control the charging power output from the second power conversion unit to be supplied to a battery,
wherein the second power conversion unit is configured to receive a power application control signal, and
wherein, when the second power conversion unit receives the power application control signal, the first power conversion unit and the relay (370) are driven in parallel.

2. The electric vehicle (10) charging control apparatus of claim 1,
wherein the AC power supplied from the grid (110) is three-phase AC power.

3. The electric vehicle (10) charging control apparatus of claim 1,
further comprising a link capacitor (150) disposed between the first power conversion unit and the second power conversion unit.

4. The electric vehicle (10) charging control apparatus of claim 1,
wherein the relay (370) comprises a plurality of switches, and
wherein the plurality of switches regulate a transmission path of the charging power through opening and closing operations.

5. The electric vehicle (10) charging control apparatus of claim 1,
wherein the first power conversion unit comprises a rectifier circuit configured to convert the AC power into the DC power, and
wherein the rectifier circuit comprises at least one semiconductor switch.

6. The electric vehicle (10) charging control apparatus of claim 1,
wherein the second power conversion unit comprises a resonant circuit configured to convert the DC power into the charging power, and
wherein the resonant circuit comprises at least one of a semiconductor switch, an inductor, and a capacitor.

7. The electric vehicle (10) charging control apparatus of claim 1,
wherein the first power conversion unit comprises:
an AC/DC power converter (236) configured to convert the AC power into the DC power; and
an AC/DC signal processing unit configured to process a control signal for controlling the AC/DC power converter (236).

8. The electric vehicle (10) charging control apparatus of claim 7,
wherein the AC/DC signal processing unit comprises an operation unit configured to determine whether the power application control signal has been received.

9. The electric vehicle (10) charging control apparatus of claim 8,
wherein the AC/DC signal processing unit is configured to transmit a PWM switching signal to the AC/DC power converter (236) when the operation unit determines that the power application control signal has been received.

10. The electric vehicle (10) charging control apparatus of claim 1,
wherein the second power conversion unit comprises:
a DC/DC power converter (236) configured to convert the DC power into the charging power; and
a DC/DC signal processing unit configured to process a control signal for controlling the DC/DC power converter (236).

11. The electric vehicle (10) charging control apparatus of claim 10,
wherein the DC/DC signal processing unit comprises:
an operation unit configured to determine whether the power application control signal has been received; and
a converter (236) configured to convert the DC voltage output from the first power conversion unit into a digital value.

12. The electric vehicle (10) charging control apparatus of claim 11,
wherein the DC/DC signal processing unit is configured to transmit a switching signal to the relay (370) when the operation unit determines that the power application control signal has been received.

13. The electric vehicle (10) charging control apparatus of claim 11,
wherein the DC/DC signal processing unit is configured to transmit a PWM switching signal to the DC/DC power converter (236) based on the digital value converted by the converter (236).

14. An electric vehicle (10) charging control system comprising:
a grid (110) configured to supply power;
an electric vehicle (10) charging control apparatus configured to convert the power supplied from the grid (110) and to supply the converted power to an electric vehicle (10); and
a charger (260) configured to transmit a power application control signal to the electric vehicle (10) charging control apparatus,
wherein the electric vehicle (10) charging control apparatus comprises:
a first power conversion unit configured to convert AC power supplied from the grid (110) into DC power;
a second power conversion unit configured to convert the DC power output from the first power conversion unit into charging power; and
a relay (370) configured to control the charging power output from the second power conversion unit to be supplied to a battery, and
wherein, when the power application control signal is received, the first power conversion unit and the relay (370) are driven in parallel.

15. The electric vehicle (10) charging control system of claim 14,
wherein the charger (260) is configured to transmit the power application control signal to the electric vehicle (10) charging control apparatus through CAN (Controller Area Network) communication.
